# EUROPEAN PATENT APPLICATION

(11) **EP 4 210 246 A1**
(43) Date of publication of application: **12.07.2023**
(21) Application number: 22205939.6
(22) Date of filing: 15.07.2010
(51) Int. Cl.: H04H 60/58, H04N 21/439, G06F 16/783

(54) **CONTENT RECOGNITION AND SYNCHRONIZATION ON A TELEVISION OR CONSUMER ELECTRONICS DEVICE**

(30) Priority: 14.08.2009 US 54155209
(62) Divisional of application: 10736928.2
(71) Applicant: Rovi Technologies Corporation, San Jose, CA 95002 (US)
(72) Inventor: OLSON, Kenneth, Ann Arbor, 48105 (US)
(74) Representative: Haley Guiliano International LLP

(57) **Abstract**

An audio portion of content, such as an audio stream, is associated with a multimedia program. A server receives an audio fingerprint and a program identifier from a network and associates the audio fingerprint with an audio identifier. A request packet including the program identifier is transmitted over the network to request program guide information associated with the program identifier. The program data including the program guide information is received from the network and metadata associated with the audio identifier and the program data are transmitted onto the network. A user device initiates a request for the metadata by using an audio fingerprint and the program identifier.

## Description

### BACKGROUND

### Field

Example aspects of the present invention generally relate to content recognition, and more particularly to associating audio content to a multimedia program.

### Related Art

The Internet has changed the way consumers listen to and purchase media content. Today, consumers can download or stream digital music and video without much effort. Further, if a consumer cannot recognize a song they are listening to such as, in a bar, on the radio, over an announcement system, etc., the consumer can simply hold up their phone where the music is playing and send a snippet of the song to a music-discovery service, and in just a few seconds the name of the song, the artist who recorded it, which album it appears on, what year it was released, and album cover art are reported back to the consumer. With a few button presses, the consumer can buy the recognized song or related album.

### BRIEF DESCRIPTION

With the advent of increased computing power in televisions and consumer electronic devices, new applications that deliver Internet services while watching TV programs are becoming more popular. Such applications enable TV viewers to interact with Internet applications designed to complement and enhance the traditional TV viewing experience by providing content, information, and community features available on the Internet.

Some broadcasters transmit program guide information for scheduled broadcast television or radio programs, which may be displayed on-screen. Users may view, navigate, select, and discover content by time, title, channel, genre, etc. by use of their remote control, a keyboard, or other input devices such as a phone keypad.

It would be useful to bring audio fingerprinting to televisions and consumer electronic (CE) devices to associate a song with a particular television show, movie, game or other content source, and further, to provide users with related metadata. One technical challenge in doing so is associating the song to the content or program. Despite the technical efforts of those providing metadata about programs, in many cases such information does not exist, or is limited. It would also be useful to provide a system that builds a database that associates information such as audio information with content such as, for example, individual programs, games, videos, television shows, movies, etc.

Moreover, despite the technical efforts of audience monitoring systems, many obstacles hinder successful mining, deployment and sharing of viewer listening preferences. It would be useful to collect such information in a database by associating disparate sources of information.

The example embodiments described herein meet the above-identified needs by providing methods, systems and computer program products for associating an audio portion of media content with a media program and a determined audio identifier (Audio_ID). The system includes a server having a network interface to transmit and receive data over a network. The server receives an audio fingerprint (FP) and a program identifier (Prog_ID) from the network and associates the audio fingerprint with an audio identifier. A request packet including the program identifier is transmitted over the network to request program guide information associated with the program identifier. The program data including the program guide information is received from the network and metadata associated with the audio identifier and the program data are transmitted onto the network.

In another aspect, a user device is provided. The user device includes an input interface to receive content from at least one content source. Preferably, the content contains an audio portion, a video portion, and program guide data including a program identifier (Prog_ID). The user device also includes a processor to generate an audio fingerprint (FP) from a subset of the audio portion and communicate the program identifier and the audio fingerprint onto a network. In addition, the user device receives metadata associated with the audio identifier (Audio_ID) and the program data from the network through a network interface.

Further features and advantages, as well as the structure and operation, of various example embodiments of the present invention are described in detail below with reference to the accompanying drawings.

### BRIEF DESCRIPTION OF THE DRAWINGS

The features and advantages of the example embodiments presented herein will become more apparent from the detailed description set forth below when taken in conjunction with the drawings in which like reference numbers indicate identical or functionally similar elements.
FIG. 1a is a system diagram of an exemplary content recognition and synchronization system 100 in which some embodiments are implemented.
FIG. 1b is a block diagram of an example home network in which some embodiments are implemented.
FIG. 2 is a block diagram of an example user device in accordance with an embodiment of the invention.
FIG. 3 is a ladder diagram showing an example procedure for associating a program identifier (Prog_ID) with an audio identifier (Audio_ID) and returning metadata associated with an audio portion of received content.
FIG. 4 illustrates an exemplary record for a particular program identifier (Prog_ID).
FIG. 5 is a high-level block diagram of a general and/or special purpose computer system, in accordance with some embodiments.

### DETAILED DESCRIPTION

Systems, methods, apparatus and computer-readable media are provided for recognizing an audio portion of received content (e.g., songs, speeches) associated with television shows, movies, games and other video sources. The content may also be individually and/or collectively referred to as media or multimedia content. In some embodiments, the content is delivered and/or streamed to a user device such as, for example, a television or another type of consumer electronic (CE) device. Some of these embodiments advantageously link information about the audio portion of the content to program guide type information to provide associated content, programs and metadata to users. Exemplary aspects and embodiments are now described in more detail herein in terms of an Internet-connected television, consumer electronic device, and/or another type of user device which executes program code to recognize the audio portion of specific content while the content is playing and/or is delivered. In an implementation, the content is delivered via streaming. These implementations advantageously retrieve program guide information and metadata from a remote recognition server. This is for convenience only and is not intended to limit the application of the present description. In fact, after reading the following description, it will be apparent to one skilled in the relevant art(s) how to implement the following invention in alternative embodiments such as, for example, by using a local area network, by using a broadcast network to receive broadcast data while communicating requests via a back-channel, etc. Definitions

The terms "multimedia program", "show", "program", "multimedia content" and the like, are generally understood to include television shows, movies, games and videos of various types.

"Electronic program guide" or "EPG" data provides a digital guide for a scheduled broadcast television typically displayed on-screen and can be used to allow a viewer to navigate, select, and discover content by time, title, channel, genre, etc. by use of their remote control, a keyboard, or other similar input devices. In addition, EPG data information can be used to schedule future recording by a digital video recorder (DVR) or personal video recorder (PVR).

Some additional terms are defined below in alphabetical order for easy reference. These terms are not rigidly restricted to these definitions. A term may be further defined by its use in other sections of this description.

"Album" means a collection of tracks. An album is typically originally published by an established entity, such as a record label (e.g., a recording company such as Warner Brothers and Universal Music).

"Audio Fingerprint" (e.g., "fingerprint", "acoustic fingerprint", "digital fingerprint") is a digital measure of certain acoustic properties that is deterministically generated from an audio signal that can be used to identify an audio sample and/or quickly locate similar items in an audio database. An audio fingerprint typically operates as a unique identifier for a particular item, such as, for example, a CD, a DVD and/or a Blu-ray Disc. The term "identifier" is defined below. An audio fingerprint is an independent piece of data that is not affected by metadata. Macrovision^{®} has databases that store over 25 million unique fingerprints for various audio samples. Practical uses of audio fingerprints include without limitation identifying songs, identifying records, identifying melodies, identifying tunes, identifying advertisements, monitoring radio broadcasts, monitoring multipoint and/or peer-to-peer networks, managing sound effects libraries and identifying video files.

"Audio Fingerprinting" is the process of generating an audio fingerprint. U.S. Patent No. 7,277,766, entitled "Method and System for Analyzing Digital Audio Files", which is herein incorporated by reference, provides an example of an apparatus for audio fingerprinting an audio waveform. U.S. Patent No. 7,451,078, entitled "Methods and Apparatus for Identifying Media Objects", which is herein incorporated by reference, provides an example of an apparatus for generating an audio fingerprint of an audio recording.

"Blu-ray", also known as Blu-ray Disc, means a disc format jointly developed by the Blu-ray Disc Association, and personal computer and media manufacturers including Apple, Dell, Hitachi, HP, JVC, LG, Mitsubishi, Panasonic, Pioneer, Philips, Samsung, Sharp, Sony, TDK and Thomson. The format was developed to enable recording, rewriting and playback of high-definition (HD) video, as well as storing large amounts of data. The format offers more than five times the storage capacity of conventional DVDs and can hold 25 GB on a single-layer disc and 800 GB on a 20-layer disc. More layers and more storage capacity may be feasible as well. This extra capacity combined with the use of advanced audio and/or video codecs offers consumers an unprecedented HD experience. While current disc technologies, such as CD and DVD, rely on a red laser to read and write data, the Blu-ray format uses a blue-violet laser instead, hence the name Blu-ray. The benefit of using a blue-violet laser (605 nm) is that it has a shorter wavelength than a red laser (650 nm). A shorter wavelength makes it possible to focus the laser spot with greater precision. This added precision allows data to be packed more tightly and stored in less space. Thus, it is possible to fit substantially more data on a Blu-ray Disc even though a Blu-ray Disc may have substantially similar physical dimensions as a traditional CD or DVD.

"Chapter" means an audio and/or video data block on a disc, such as a Blu-ray Disc, a CD or a DVD. A chapter stores at least a portion of an audio and/or video recording.

"Compact Disc" (CD) means a disc used to store digital data. A CD was originally developed for storing digital audio. Standard CDs have a diameter of 740 mm and can typically hold up to 80 minutes of audio. There is also the mini-CD, with diameters ranging from 60 to 80 mm. Mini-CDs are sometimes used for CD singles and typically store up to 24 minutes of audio. CD technology has been adapted and expanded to include without limitation data storage CD-ROM, write-once audio and data storage CD-R, rewritable media CD-RW, Super Audio CD (SACD), Video Compact Discs (VCD), Super Video Compact Discs (SVCD), Photo CD, Picture CD, Compact Disc Interactive (CD-i), and Enhanced CD. The wavelength used by standard CD lasers is 650 nm, and thus the light of a standard CD laser typically has a red color.

"Database" means a collection of data organized in such a way that a computer program may quickly select desired pieces of the data. A database is an electronic filing system. In some implementations, the term "database" may be used as shorthand for "database management system".

"Device" means software, hardware or a combination thereof. A device may sometimes be referred to as an apparatus. Examples of a device include without limitation a software application such as Microsoft Word^{®}, a laptop computer, a database, a server, a display, a computer mouse, and a hard disk.

"Digital Video Disc" (DVD) means a disc used to store digital data. A DVD was originally developed for storing digital video and digital audio data. Most DVDs have substantially similar physical dimensions as compact discs (CDs), but DVDs store more than six times as much data. There is also the mini-DVD, with diameters ranging from 60 to 80 mm. DVD technology has been adapted and expanded to include DVD-ROM, DVD-R, DVD+R, DVD-RW, DVD+RW and DVD-RAM. The wavelength used by standard DVD lasers is approximately 650 nm, and thus the light of a standard DVD laser typically has a red color.

"Fuzzy search" (e.g., "fuzzy string search", "approximate string search") means a search for text strings that approximately or substantially match a given text string pattern. Fuzzy searching may also be known as approximate or inexact matching. An exact match may inadvertently occur while performing a fuzzy search.

"Signature" means an identifying means that uniquely identifies an item, such as, for example, a track, a song, an album, a CD, a DVD and/or Blu-ray Disc, among other items. Examples of a signature include without limitation the following in a computer-readable format: an audio fingerprint, a portion of an audio fingerprint, a signature derived from an audio fingerprint, an audio signature, a video signature, a disc signature, a CD signature, a DVD signature, a Blu-ray Disc signature, a media signature, a high definition media signature, a human fingerprint, a human footprint, an animal fingerprint, an animal footprint, a handwritten signature, an eye print, a biometric signature, a retinal signature, a retinal scan, a DNA signature, a DNA profile, a genetic signature and/or a genetic profile, among other signatures. A signature may be any computer-readable string of characters that comports with any coding standard in any language. Examples of a coding standard include without limitation alphabet, alphanumeric, decimal, hexadecimal, binary, American Standard Code for Information Interchange (ASCII), Unicode and/or Universal Character Set (UCS). Certain signatures may not initially be computer-readable. For example, latent human fingerprints may be printed on a door knob in the physical world. A signature that is initially not computer-readable may be converted into a computer-readable signature by using any appropriate conversion technique. For example, a conversion technique for converting a latent human fingerprint into a computer-readable signature may include a ridge characteristics analysis.

"Link" means an association with an object or an element in memory. A link is typically a pointer. A pointer is a variable that contains the address of a location in memory. The location is the starting point of an allocated object, such as an object or value type, or the element of an array. The memory may be located on a database or a database system. "Linking" means associating with (e.g., pointing to) an object in memory.

"Metadata" generally means data that describes data. More particularly, metadata may be used to describe the contents of digital recordings. Such metadata may include, for example, a track name, a song name, artist information (e.g., name, birth date, discography), album information (e.g., album title, review, track listing, sound samples), relational information (e.g., similar artists and albums, genre) and/or other types of supplemental information such as advertisements, links or programs (*e.g*., software applications), and related images. Metadata may also include a program guide listing of the songs or other audio content associated with multimedia content. Conventional optical discs (e.g., CDs, DVDs, Blu-ray Discs) do not typically contain metadata. Metadata may be associated with a digital recording (e.g., song, album, movie or video) after the digital recording has been ripped from an optical disc, converted to another digital audio format and stored on a hard drive.

"Network" means a connection between any two or more computers, which permits the transmission of data. A network may be any combination of networks, including without limitation the Internet, a local area network, a wide area network, a wireless network and a cellular network.

"Occurrence" means a copy of a recording. An occurrence is preferably an exact copy of a recording. For example, different occurrences of a same pressing are typically exact copies. However, an occurrence is not necessarily an exact copy of a recording, and may be a substantially similar copy. A recording may be an inexact copy for a number of reasons, including without limitation an imperfection in the copying process, different pressings having different settings, different copies having different encodings, and other reasons. Accordingly, a recording may be the source of multiple occurrences that may be exact copies or substantially similar copies. Different occurrences may be located on different devices, including without limitation different user devices, different MP3 players, different databases, different laptops, and so on. Each occurrence of a recording may be located on any appropriate storage medium, including without limitation floppy disk, mini disk, optical disc, Blu-ray Disc, DVD, CD-ROM, micro-drive, magneto-optical disk, ROM, RAM, EPROM, EEPROM, DRAM, VRAM, flash memory, flash card, magnetic card, optical card, nano systems, molecular memory integrated circuit, RAID, remote data storage/archive/warehousing, and/or any other type of storage device. Occurrences may be compiled, such as in a database or in a listing.

"Pressing" (e.g., "disc pressing") means producing a disc in a disc press from a master. The disc press preferably includes a laser beam having a bandwidth of about 650 nm for DVD or about 605 nm for Blu-ray Disc.

"Recording" means media data for playback. A recording is preferably a computer readable digital recording and may be, for example, an audio track, a video track, a song, a chapter, a CD recording, a DVD recording and/or a Blu-ray Disc recording, among other things.

"Server" means a software application that provides services to other computer programs (and their users), in the same or other computer. A server may also refer to the physical computer that has been set aside to run a specific server application. For example, when the software Apache HTTP Server is used as the web server for a company's website, the computer running Apache is also called the web server. Server applications can be divided among server computers over an extreme range, depending upon the workload.

"Software" means a computer program that is written in a programming language that may be used by one of ordinary skill in the art. The programming language chosen should be compatible with the computer by which the software application is to be executed and, in particular, with the operating system of that computer. Examples of suitable programming languages include without limitation Object Pascal, C, C++ and Java. Further, the functions of some embodiments, when described as a series of steps for a method, could be implemented as a series of software instructions for being operated by a processor, such that the embodiments could be implemented as software, hardware, or a combination thereof. Computer readable media are discussed in more detail in a separate section below.

"Song" means a musical composition. A song is typically recorded onto a track by a record label (e.g., recording company). A song may have many different versions, for example, a radio version and an extended version.

"System" means a device or multiple coupled devices. A device is defined above.

"Track" means an audio/video data block. A track may be on a disc, such as, for example, a Blu-ray Disc, a CD or a DVD.

"User" means a consumer, client, and/or client device in a marketplace of products and/or services.

"User device" (e.g., "client", "client device", "user computer") is a hardware system, a software operating system and/or one or more software application programs. A user device may refer to a single computer or to a network of interacting computers. A user device may be the client part of a client-server architecture. A user device typically relies on a server to perform some operations. Examples of a user device include without limitation a television, a CD player, a DVD player, a Blu-ray Disc player, a personal media device, a portable media player, an iPod^{®}, a Zoom Player, a laptop computer, a palmtop computer, a smart phone, a cell phone, a mobile phone, an MP3 player, a digital audio recorder, a digital video recorder, an IBM-type personal computer (PC) having an operating system such as Microsoft Windows^{®}, an Apple^{®} computer having an operating system such as MAC-OS, hardware having a JAVA-OS operating system, and a Sun Microsystems Workstation having a UNIX operating system.

"Web browser" means any software program which can display text, graphics, or both, from Web pages on Web sites. Examples of a Web browser include without limitation Mozilla Firefox^{®} and Microsoft Internet Explorer^{®}.

"Web page" means any documents written in mark-up language including without limitation HTML (hypertext mark-up language) or VRML (virtual reality modeling language), dynamic HTML, XML (extended mark-up language) or related computer languages thereof, as well as to any collection of such documents reachable through one specific Internet address or at one specific Web site, or any document obtainable through a particular URL (Uniform Resource Locator).

"Web server" refers to a computer or other electronic device which is capable of serving at least one Web page to a Web browser. An example of a Web server is a Yahoo^{®} Web server.

"Web site" means at least one Web page, and more commonly a plurality of Web pages, virtually coupled to form a coherent group.

### System Architecture

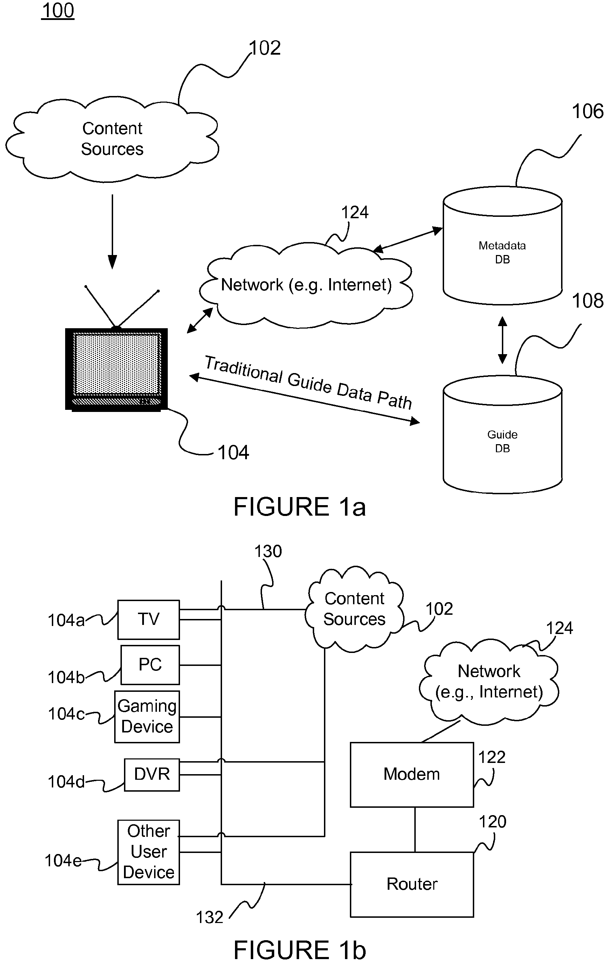

FIG. 1a is a system diagram of an exemplary audio recognition and synchronization system 100 in which an embodiment is implemented. As shown in FIG. 1a, system 100 includes at least one content source 102 that provides multimedia content, a metadata database 106 that contains supplemental content associated with an audio portion of a multimedia stream (*e.g*., audio metadata). As will be explained in more detail below, metadata database 106 can also be a repository for both program metadata and audio metadata that have been associated.

A guide database 108 provides EPG data associated with a multimedia program. As shown in FIG. 1a, guide database 108 provides the EPG data to a user device 104 for content and/or media, such as a television, an audio device, a video device, and/or another type of user and/or consumer electronic (CE) device. Guide database 108 also stores program metadata that may not be communicated directly to the user device 104.

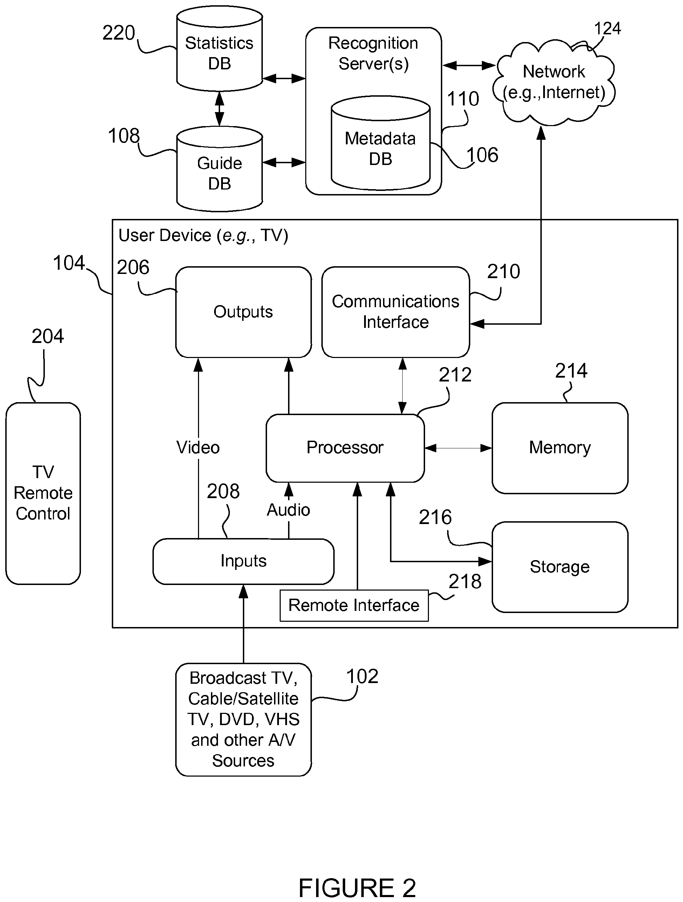

As shown in FIG. 1a, metadata database 106 and guide database 108 are linked. In one embodiment, this link is initiated from within the user device 104. A request packet from the user device 104 causes a remote server (110 illustrated in Figure 2) to associate the audio data to a program for the purpose of retrieving metadata about the program. In some embodiments, this association is a logical association and/or link. It should be understood, however, that a link between entries within the metadata database 106 and entries within the guide database 108 may be physical and still be within the scope of the invention.

A program identifier (Prog_ID) corresponding to the multimedia content such as, for example, a television program being tuned-in from a content source 102, is provided to the user device 104 by the guide database 108. The user device 104 performs an algorithm on the audio content of the multimedia content to generate an audio fingerprint (FP) or extract a watermark, which in turn is communicated to a recognition server via a network 124 such as the Internet. The recognition server includes or is in communication with the metadata database 106. The recognition server of some embodiments is further described in relation to Figure 2. A search of the metadata database 106 is performed to lookup an audio identifier (Audio_ID) associated with the audio portion of the content received by the user device 104 from the content source 102 based on the audio fingerprint (FP). Once identified, the audio identifier (Audio_ID) together with a program identifier (Prog_ID) are used to make a logical link between entries within the metadata database 106 and the guide database 108.

Preferably, only a subset of the audio portion is used to generate the fingerprint (FP). In one example, a fingerprinting procedure is executed by a processor on encoded or compressed audio data which has been converted into a stereo pulse code modulated (PCM) audio stream. Pulse code modulation is a format by which many consumer electronic products operate and internally compress and/or uncompress audio data. Embodiments of the invention are advantageously performed on any type of audio data file or stream, and therefore are not limited to operations on PCM formatted audio streams. Accordingly, any memory size, number of frames, sampling rates, time, and the like, used to perform audio fingerprinting are within the scope of the present invention.

FIG. 1b is a block diagram of an example home network in which some embodiments are implemented. On the home network may be a variety of user devices, such as a network ready television 104a, a personal computer 104b, a gaming device 104c, a digital video recorder 104d, other devices 104e, and the like. User devices 104a-104e may receive multimedia content from content sources 102 through multimedia signal lines 130, through an input interface such as the input interface 208 described below in connection with FIG. 2. In addition, user devices 104a-104e may communication with each other through a wired or wireless router 120 via network connections 132, such as Ethernet. The router 120 connects the user devices 104a-104e to the network 124, such as the Internet, through a modem 122. In an alternative embodiment, content sources 102 are delivered from the network 124.

FIG. 2 includes a more detailed diagram of the user device 104 of some embodiments. As shown in FIG. 2, the exemplary user device 104 includes a processor 212 which is coupled through a communication infrastructure (not shown) to an output component via output interface 206, a communications interface 210, a memory 214, a storage device 216, a remote control interface 218, and an input interface 208.

The input interface 208 receives content such as in the form of audio and video streams from the content sources 102, which communicate, for example, through an HDMI (High-Definition Multimedia Interface), Radio Frequency (RF) coaxial cable, composite video, S-Video, SCART, component video, D-Terminal, VGA, and the like, to the user device 104. The content sources 102 include set-top boxes, Blu-ray Disc players, personal computers (PCs), video game consoles such as the PlayStation 3 and the Xbox 360, for example, and A/V receivers, and the like. The content sources 102 provide a program identifier for the movie, show or game, which is stored in a memory 214.

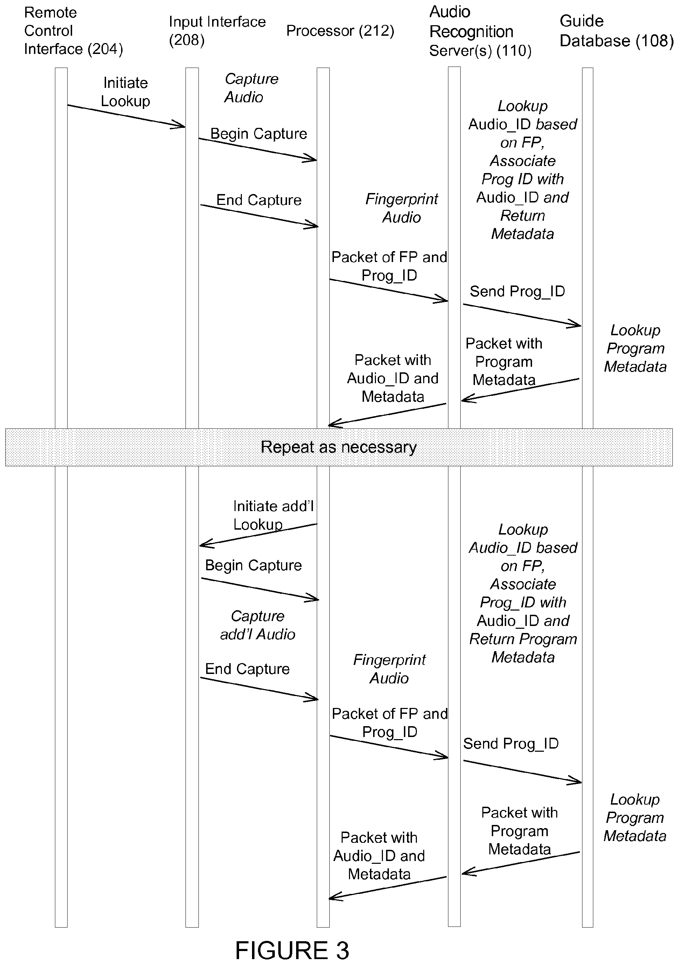

In the example shown in FIG. 2, video signals received by the input interface 208 from such content sources 102 are coupled directly to the output interface 206. Audio signals are communicated to the processor 212 for further processing. The processor 212 performs audio fingerprinting on at least a subset of the audio portion of the received content and requests metadata from one or more remote servers. As described in more detail below with respect to FIG. 3, the metadata are preferably requested based on a generated audio fingerprint (FP) and/or the program identifier.

The user device 104 also includes a main memory 214. Preferably main memory 214 is random access memory (RAM). The user device 104 may also include a storage device 216. The storage device 216 (also sometimes referred to as "secondary memory") may include, for example, a hard disk drive and/or a removable storage drive, representing a disk drive, a magnetic tape drive, an optical disk drive, etc. As will be appreciated, storage device 216 may include a computer-readable storage medium having stored thereon computer software and/or data.

In alternative embodiments, storage device 216 may include other similar devices for allowing computer programs or other instructions to be loaded into the user device 104. Such devices may include, for example, a removable storage unit and an interface. Examples of such may include a program cartridge and cartridge interface such as that found in video game devices, a removable memory chip such as an erasable programmable read only memory (EPROM), or programmable read only memory (PROM) and associated socket, and other removable storage units and interfaces, which allow software and data to be transferred from the removable storage unit to the user device 104.

The user device 104 includes the communications interface 210 to provide connectivity to a network 124 such as the Internet. The communications interface 210 also allows software and data to be transferred between the user device 104 and external devices. Examples of the communications interface 210 may include a modem, a network interface such as an Ethernet card, a communications port, a Personal Computer Memory Card International Association (PCMCIA) slot and card, *etc.* Software and data transferred via the communications interface 210 are in the form of signals which may be electronic, electromagnetic, optical or other signals capable of being received by the communications interface 210. These signals are provided to the communications interface 210 via a communications path, *e.g.,* a channel, from, for example, one or more recognition servers 110. This channel carries signals and may be implemented by using wire or cable, fiber optics, a telephone line, a cellular link, an RF link and other communications channels.

A remote control interface 218 decodes signals received from a remote control 204, *e.g.,* a television remote control or other input device keyboard, and communicates the decoded signals to processor 212. The decoded signals, in turn, are translated and processed by the processor 212.

As shown in FIG. 2, the recognition servers 110 may also be in communication with a statistics database 220 and a guide database 106. The statistics database 220 and/or guide database 108 may also be in communication directly with the metadata database 106. In addition, the metadata database 106 may be part of or remote from the recognition servers 110.

FIG. 3 is a ladder diagram showing an example procedure for associating a program identifier (Prog_ID) with an audio identifier (Audio_ID) and returning metadata associated with a song. Referring to both FIGs. 2 and 3, initially, the user device 104 receives a command to initiate a lookup by, for example, a remote control 204. Next, the input interface 208 captures a sample of the audio stream from a content source 102, and feeds the audio stream such as a PCM audio stream, for example, to a processor 212, which performs an audio recognition process on the captured audio. Particularly, the processor 212 analyzes the captured audio to generate an audio fingerprint (FP).

It should be understood that different audio fingerprinting algorithms may be executed by the processor 212 to generate audio fingerprints and that the audio fingerprints may be different. Two exemplary audio fingerprinting algorithms are described in U.S. Patent 7,451,078, entitled "Methods and Apparatus for Identifying Media Objects", filed December 30, 2004, and U.S. Patent 7,277,766, entitled "Method and System for Analyzing Digital Audio Files", filed October 24, 2000, both of which are hereby incorporated by reference herein in their entirety. Similarly, instead of audio fingerprinting captured audio, other audio identification techniques can be used. For example a watermark embedded into the audio stream or a tag inserted in the audio stream can be used as an identifier, e.g., the Audio_ID.

Once an audio fingerprint (FP) or other identifier has been generated by the processor 212, the audio fingerprint (FP) and program identifier (Prog_ID) are transmitted to one or more recognition server(s) 110. The recognition server 110 is also referred to more generally as a back-end server. The recognition server 110, in turn, performs a lookup of an audio identifier (Audio_ID) associated with the audio portion of the content, such as, for example, a song being played, based on the audio fingerprint (FP) of the song. Metadata about the audio portion of the content are also retrieved from the metadata database 106.

The program identifier (Prog_ID) is transmitted to the guide database 108. In turn, the guide database 108 returns program metadata including information about an audio portion of the received content and/or audio metadata. The guide database 108 of some embodiments returns the metadata in one or more datagrams and/or packets. For instance, the audio metadata and the program metadata are returned within the same packet or in separate packets. The packet transmitted by the guide database 108 to the recognition server 110 is a return packet from an original request. Accordingly, the metadata carried in the packet is preferably appropriately matched based on identifying information provided in a field of the packet which is examined and recognized by the other servers, databases and/or devices on the network 124. This identifying field may be the program identifier (Prog_ID) or other identifier initially provided by the user device 104, and/or generated by the processor 212 or the communications interface 210, for example. The recognition server 110 transmits onto the network 124 the audio identifier (Audio_ID) with the metadata to the user device 104, particularly to the processor 212 via the communications interface 210.

The processor 212 stores metadata in memory 214 and displays the metadata through an output interface 206. In one embodiment, the output interface 206 presents the metadata as an overlay of the video received from the content source 102, which is being displayed on the television or the user device 104.

The same procedure discussed above may be performed until the audio portion of the content is recognized. Thus, if an audio fingerprint of a captured audio portion of the content is precise enough to return metadata, the procedure ends. In some cases, it is desirable to capture additional audio content from the content source 102. For example, the audio fingerprint may not be sufficiently robust for the recognition server 110 to match it to an audio identifier (Audio_ID). In such case, the return packet from the recognition server 110 may be inconclusive, *e.g.,* the return packet returns a null audio identifier (Audio_ID). Various reasons may be the cause of this. One example is that audio content was mixed with voice-over or sound effects noises in a received multimedia content stream.

To avoid, as best as possible, an inconclusive or erroneous result, additional audio content is preferably captured. This provides the recognition procedure executed by the processor 212 with more audio information, resulting in a more robust audio fingerprint. In some cases, multiple fingerprints are associated with the audio rendering. By capturing additional data, the fingerprint algorithm may generate different fingerprints for the same audio portion or subset of the audio portion. Different fingerprints may be generated based on the length of the captured segment or from where within the audio stream the audio capturing took place. In other words, the processor 212 detects a time-based offset location of the multimedia content corresponding to the audio fingerprint and transmits the location onto the network to, for example, a remote recognition server.

As shown in FIG. 3, the processor 212 may initiate an additional lookup. This causes additional audio to be captured by the input interface 208. Alternatively, this additional information is extracted from memory 214 or storage 216 if the audio stream has been buffered.

The processor 212 performs audio recognition on the additional information. Particularly, the additional audio information may be added to the audio information previously captured, to make the total captured segment longer. Alternatively, a different start and stop time within the captured audio portion, *e.g.*, within a song, may be used to generate the audio fingerprint. In yet another embodiment, the processor 212 is programmed to adjust the total audio capture time.

The different audio capture times may be prestored or based on an analysis of prior lookup results. Alternatively, this analysis is performed offline by, for example, a statistics server database 220, and the new capture time may be downloaded by the processor 212 through the communications interface 210 during an update.

Once a new or additional fingerprint is generated, the processor 212 transmits it to the recognition server 110 along with the program identifier (Prog_ID). In turn, the recognition server 110 performs a lookup based on the fingerprint (FP) for an audio identifier (Audio_ID). The recognition server 110 transmits the audio identifier (Audio_ID) along with the program identifier (Prog_ID) to metadata database 106, which associates the program identifier and the audio identifier, and uses this information to locate metadata within the metadata database 106 related to the audio identifier (Audio_ID) and/or the program identifier (Prog_ID).

The program identifier (Prog_ID) is transmitted to the guide database 108. In turn, the guide database 108 returns program metadata including information about the audio portion of received content such as, for example, one or more recognizable song(s) within a multimedia stream. The metadata database 106 then returns the metadata along with the audio identifier (Audio_ID) to the processor 212 through the recognition server 110. As described above, other information, if necessary, may be transmitted within the packets for use by either the recognition server 110 or the processor 212 to match the initial request to the metadata.

The capture of additional audio information may be performed without a lookup request from the remote control 204. Similarly, it can be performed with or without a request for additional information from the metadata database 106 or the recognition server 110. In other words, the additional capture procedure may be set to run until the processor 212 stops performing the additional audio capture. In this embodiment, it is not necessary for the metadata database 106 or the recognition server 110 to notify the user device 104, which advantageously reduces the amount of time between the initial lookup request and the return of metadata.

By performing the additional lookup, several audio identifiers may be returned to the processor 212. These several audio identifiers may be the same or different. The processor 212 may then perform a comparison of the received several audio identifiers to determine if the correct metadata has been received and delete any duplicates. This allows the processor 212 to make the decision as to whether it needs to capture additional audio content from the content source 102 or whether to use audio content stored in its buffer such as, for example, the memory 214. In another example embodiment, the processor 212 may control the amount of audio information to capture based on the returned audio identifier data. For example, if the first audio identifier found has one value, *e.g.,* corresponding to one rendition of a particular song, and the second audio identifier found by the recognition server 110 has a different value, *e.g.,* for a different rendition of the same song, then the processor 212 may generate the fingerprint based on a longer segment, based on a completely different segment, on various segments, and the like.

Although not shown, in an alternative embodiment, the recognition server 110 may also send back the audio identifier to the user device 104 concurrently with sending the audio identifier (Audio_ID) to the metadata database 106. In some cases, the user device 104 sends and receives multiple audio fingerprints and audio identifiers before receiving a packet from the metadata database 106 with the metadata information. This could be used to assist the processor 212 in making a determination whether to inhibit or allow the metadata to be presented through the output interface 206.

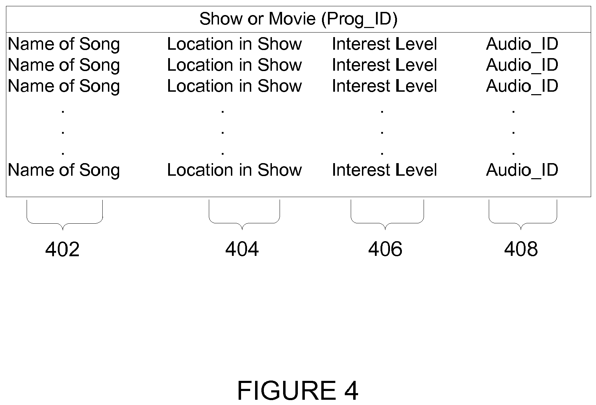

FIG. 4 illustrates an exemplary record 400 for a particular program identifier (Prog_ID), which in one embodiment is generated by the recognition server 110. Additional metadata may also be contained in this record 400. More particularly, information in this record 400 is obtained from a combination of data received from the user device 104, the metadata database 106, the guide database 108 and/or the statistics database 220. In one embodiment, this information is associated by the recognition server 110. For example, the program identifier (Prog_ID) of the show or movie received by the user device 104, metadata from the metadata database 106 and statistics from the statistics database 220 are associated and stored as records, e.g., the record 400, in the metadata database 106.

In the example record 400 shown in FIG. 4, the record 400 includes the name of each song 402 in the show or movie, the location for each song within the show or movie 404, an interest level 404 by the user for the song, and the audio identifier (Audio_ID) 408 for each song. The interest level data is just one type of metric based on gathered information. Other example metrics include popularity, time-based distribution of user "clicks", and volume of "clicks" indicating, for example, raw popularity, to name a few. Additional information may be included in this record 400 or may be retrieved separately from another database based on the audio identifier (Audio_ID), the name of the song, and/or the program identifier (Prog_ID).

As shown in FIG. 2, the statistics database 220 and the metadata database 106 may communicate with each other. Thus, information from the statistics database 220 may also be collected and associated by the metadata database 106 and the associated data may be transmitted by the metadata database 106 to the recognition server 110 directly. As shown in FIG. 4, the program identifier (Prog_ID) may be associated with several songs.

### Exemplary Computer Readable Medium Implementation

The example embodiments described above such as, for example, the systems 100, 200, the process 300 or any part(s) or function(s) thereof) may be implemented by using hardware, software or a combination thereof and may be implemented in one or more computer systems or other processing systems. However, the manipulations performed by these example embodiments were often referred to in terms, such as entering, which are commonly associated with mental operations performed by a human operator. No such capability of a human operator is necessary in any of the operations described herein. For example, the user device 104 may automatically initiate the lookup without a viewer's input through the remote control 204. In other words, the operations may be completely implemented with machine operations. Useful machines for performing the operation of the example embodiments presented herein include general purpose digital computers or similar devices.

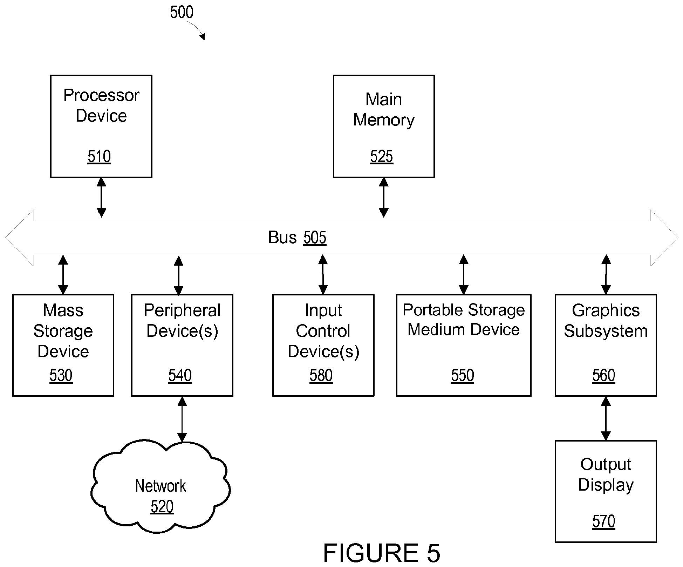

FIG. 5 is a high-level block diagram of a general/special purpose computer system 500, in accordance with some embodiments. The computer system 500 may be, for example, a user device, a user computer, a client computer and/or a server computer, among other things.

Examples of a user device include without limitation a television, a Blu-ray Disc player, a personal media device, a portable media player, an iPod(r), a Zoom Player, a laptop computer, a palmtop computer, a smart phone, a cell phone, a mobile phone, an mp3 player, a digital audio recorder, a digital video recorder, a CD player, a DVD player, an IBM-type personal computer (PC) having an operating system such as Microsoft Windows(r), an Apple(r) computer having an operating system such as MAC-OS, hardware having a JAVA-OS operating system, and a Sun Microsystems Workstation having a UNIX operating system.

The computer system 500 preferably includes without limitation a processor device 510, a main memory 525, and an interconnect bus 505. The processor device 510 may include without limitation a single microprocessor, or may include a plurality of microprocessors for configuring the computer system 500 as a multi processor system. The main memory 525 stores, among other things, instructions and/or data for execution by the processor device 510. If the system for storing an internal identifier in metadata is partially implemented in software, the main memory 525 stores the executable code when in operation. The main memory 525 may include banks of dynamic random access memory (DRAM), as well as cache memory.

The computer system 500 may further include a mass storage device 530, peripheral device(s) 540, portable storage medium device(s) 550, input control device(s) 580, a graphics subsystem 560, and/or an output display 570. For explanatory purposes, all components in the computer system 500 are shown in FIG. 5 as being coupled via the bus 505. However, the computer system 500 is not so limited. Devices of the computer system 500 may be coupled through one or more data transport means. For example, the processor device 510 and/or the main memory 525 may be coupled via a local microprocessor bus. The mass storage device 530, peripheral device(s) 540, portable storage medium device(s) 550, and/or graphics subsystem 560 may be coupled via one or more input/output (I/O) buses. The mass storage device 530 is preferably a nonvolatile storage device for storing data and/or instructions for use by the processor device 510. The mass storage device 530 may be implemented, for example, with a magnetic disk drive or an optical disk drive. In a software embodiment, the mass storage device 530 is preferably configured for loading contents of the mass storage device 530 into the main memory 525.

The portable storage medium device 550 operates in conjunction with a nonvolatile portable storage medium, such as, for example, a compact disc read only memory (CD ROM), to input and output data and code to and from the computer system 500. In some embodiments, the software for storing an internal identifier in metadata may be stored on a portable storage medium, and may be inputted into the computer system 500 via the portable storage medium device 550. The peripheral device(s) 540 may include any type of computer support device, such as, for example, an input/output (I/O) interface configured to add additional functionality to the computer system 500. For example, the peripheral device(s) 540 may include a network interface card for interfacing the computer system 500 with a network 520.

The input control device(s) 580 provide a portion of the user interface for a user of the computer system 500. The input control device(s) 580 may include a keypad and/or a cursor control device. The keypad may be configured for inputting alphanumeric and/or other key information. The cursor control device may include, for example, a mouse, a trackball, a stylus, and/or cursor direction keys. In order to display textual and graphical information, the computer system 500 preferably includes the graphics subsystem 560 and the output display 570. The output display 570 may include a cathode ray tube (CRT) display and/or a liquid crystal display (LCD). The graphics subsystem 560 receives textual and graphical information, and processes the information for output to the output display 570.

Each component of the computer system 500 may represent a broad category of a computer component of a general/special purpose computer. Components of the computer system 500 are not limited to the specific implementations provided here.

Portions of the invention may be conveniently implemented by using a conventional general purpose computer, a specialized digital computer and/or a microprocessor programmed according to the teachings of the present disclosure, as will be apparent to those skilled in the computer art. Appropriate software coding may readily be prepared by skilled programmers based on the teachings of the present disclosure.

Some embodiments may also be implemented by the preparation of application-specific integrated circuits or by interconnecting an appropriate network of conventional component circuits.

Some embodiments include a computer program product. The computer program product may be a storage medium/media having instructions stored thereon/therein which can be used to control, or cause, a computer to perform any of the processes of the invention. The storage medium may include without limitation floppy disk, mini disk, optical disc, Blu-ray Disc, DVD, CD-ROM, micro-drive, magneto-optical disk, ROM, RAM, EPROM, EEPROM, DRAM, VRAM, flash memory, flash card, magnetic card, optical card, nanosystems, molecular memory integrated circuit, RAID, remote data storage/archive/warehousing, and/or any other type of device suitable for storing instructions and/or data.

Stored on any one of the computer readable medium/media, some implementations include software for controlling both the hardware of the general/special computer or microprocessor, and for enabling the computer or microprocessor to interact with a human user or other mechanism utilizing the results of the invention. Such software may include without limitation device drivers, operating systems, and user applications. Ultimately, such computer readable media further includes software for performing aspects of the invention, as described above.

Included in the programming/software of the general/special purpose computer or microprocessor are software modules for implementing the processes described above. The processes described above may include without limitation the following: receiving a recording, generating an internal identifier for the recording, and adding the internal identifier to metadata associated with at least one occurrence of the recording.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims and their equivalents.

In addition, it should be understood that the figures are presented for example purposes only. The architecture of the example embodiments presented herein is sufficiently flexible and configurable, such that it may be utilized and navigated in ways other than that shown in the accompanying figures.

Further, the purpose of the Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

This specification discloses embodiments which include, but are not limited to, the following:
1. A system for associating an audio portion of received content with a multimedia program, the system comprising:
   a server including a network interface to transmit and receive data over a network, the server operable to:
   receive an audio fingerprint and a program identifier from the network,
   associate the audio fingerprint with an audio identifier,
   transmit a request packet including the program identifier over the network, the request packet requesting program guide information associated with the program identifier,
   receive program data including the program guide information from the network, and
   transmit metadata associated with the audio identifier and the program data onto the network.
2. The system according to Claim 1, wherein the server is configured to generate a record corresponding to the program identifier including at least one audio identifier associated with the multimedia program and metadata associated with each audio identifier.
3. The system according to Claim 2, wherein the metadata includes a metric associated with each audio identifier.
4. The system according to Claim 1, further comprising:
   a user device including:
   an input interface operable to receive the received content from at least one source, the received content containing an audio portion, a video portion and program guide data, the program guide data including the program identifier; and
   a processor operable to generate an audio fingerprint from a subset of the audio portion, communicate the program identifier and the audio fingerprint onto a network, and receive metadata associated with the audio identifier and the program data from the network through the network interface.
5. The system according to Claim 4, wherein the user device further includes a remote interface operable to receive from a remote control a command to initiate a lookup for metadata.
6. The system according to Claim 4, wherein the user device further includes:
   a memory operable to store the subset of the audio portion, wherein the processor generates another audio fingerprint based on at least one of:
   an additional subset of the audio portion and
   combined subsets of the audio portion.
7. The system according to Claim 4, wherein the processor is further configured to detect a time-based offset location of the received content corresponding to the audio fingerprint and transmit the location onto the network.
8. A method for associating an audio portion of received content with a multimedia program, the method comprising:
   receiving an audio fingerprint and a program identifier from a network;
   associating the audio fingerprint with an audio identifier;
   transmitting a request packet including the program identifier over the network, the request packet requesting program guide information associated with the program identifier;
   receiving program data including the program guide information from the network; and
   transmitting metadata associated with the audio identifier and the program data onto the network.
9. The method according to Claim 8, further comprising:
   generating a record corresponding to the program identifier including at least one audio identifier associated with the multimedia program and metadata associated with each audio identifier.
10. The method according to Claim 9, wherein the metadata includes a metric associated with each audio identifier.
11. The method of Claim 8, further comprising:
   receiving the received content, from at least one source, the received content containing an audio portion, a video portion and program guide data, the program guide data including the program identifier;
   generating an audio fingerprint from a subset of the audio portion of the received content;
   communicating the program identifier and the audio fingerprint onto a network; and
   receiving the metadata associated with the audio identifier and the program data from the network through a network interface,
   wherein the above steps are performed by a user device including at least one processor.
12. The method according to Claim 11, further comprising:
   receiving, from a remote control, a command to initiate a lookup for the metadata.
13. The method according to Claim 11, further comprising:
   storing the subset of the audio portion of the received content; and
   generating another audio fingerprint based on at least one of:
      an additional subset of the audio portion and
      combined subsets of the audio portion of the received content.
14. The method according to Claim 11, further comprising:
   detecting a time-based offset location of the received content corresponding to the audio fingerprint; and
   transmitting the location onto the network.
15. A computer-readable medium having stored thereon sequences of instructions, the sequences of instructions including instructions which when executed by a computer system causes the computer system to perform:
   receiving an audio fingerprint and a program identifier from a network; associating the audio fingerprint with an audio identifier;
   transmitting a request packet including the program identifier over the network, the request packet requesting program guide information associated with the program identifier;
   receiving program data including the program guide information from the network; and
   transmitting metadata associated with the audio identifier and the program data onto the network.
16. The computer-readable medium according to Claim 15, further having stored thereon a sequence of instructions which when executed by the computer system causes the computer system to perform:
   generating a record corresponding to the program identifier including at least one audio identifier associated with the multimedia program and metadata associated with each audio identifier.
17. The computer-readable medium of Claim 16, wherein the metadata includes a metric associated with each audio identifier.
18. The computer-readable medium of Claim 15, further having stored thereon a sequence of instructions which when executed by the computer system causes the computer system to perform:
   receiving content, from at least one source, the received content containing an audio portion, a video portion, and program guide data, the program guide data including the program identifier;
   generating an audio fingerprint from a subset of the audio portion of the received content;
   communicating the program identifier and the audio fingerprint onto a network; and
   receiving the metadata associated with the audio identifier and the program data from the network through a network interface,
   wherein the above steps are performed by a user device including at least one processor.
19. The computer-readable medium of Claim 18, further having stored thereon a sequence of instructions which when executed by the computer system causes the computer system to perform:
   storing the subset of the audio portion; and
   generating another audio fingerprint based on at least one of:
      an additional subset of the audio portion and
      combined subsets of the audio portion of the received content.
20. The computer-readable medium of Claim 18, further having stored thereon a sequence of instructions which when executed by the computer system causes the computer system to perform:
   detecting a time-based offset location of the received content corresponding to the audio fingerprint; and
   transmitting the location onto the network.

## Claims

1. A user device (104) comprising:
an input interface operable to receive:
a) a multimedia program from at least one source (102), the multimedia program comprising an audio portion and a video portion; and
b) program guide data including a program identifier for the multimedia program; and
a processor (212) operable to generate an audio fingerprint from a subset of the audio portion, send the program identifier and the audio fingerprint onto a network, and receive an audio identifier associated with the audio fingerprint.

2. The user device (104) of claim 1, wherein the user device further includes a remote interface operable to receive from a remote control a command to initiate a lookup for an audio identifier.

3. The user device (104) of claim 1, wherein the user device further includes:
a memory operable to store the subset of the audio portion;
wherein the processor generates another audio fingerprint based on at least one of:
an additional subset of the audio portion; and
combined subsets of the audio portion.

4. The user device (104) of claim 1, wherein the processor is further configured to detect a time-based offset location of the multimedia program corresponding to the audio fingerprint and send the time-based offset location onto the network.

5. A system comprising:
a user device according to any preceding claim;
a server (110) including a network interface, the server (110) being operable to:
receive, via the network interface, from the user device, the audio fingerprint generated by the user device;
retrieve, based on the received audio fingerprint, an audio identifier (408) that identifies the audio portion of the multimedia program;
associate the audio fingerprint with an audio identifier;
send a request including the program identifier, the request requesting program guide information associated with the program identifier;
receive program data including the program guide information; and
send, via the network interface, to the user device, the metadata associated with the audio identifier and the program data.

6. The system of claim 5, wherein the server is configured to generate a record corresponding to the program identifier including at least one audio identifier associated with the multimedia program and metadata associated with each audio identifier.

7. The system according to claim 5 or 6, wherein the metadata includes a metric associated with each audio identifier.

8. A method of operating a user device including at least one processor, the method comprising operating the user device to:
receive:
a) a multimedia program from at least one source (102), the multimedia program comprising an audio portion and a video portion; and
b) program guide data including a program identifier for the multimedia program;
generate an audio fingerprint from a subset of the audio portion;
send the program identifier and the audio fingerprint onto a network; and receive an audio identifier associated with the audio fingerprint.

9. A method according to claim 8, further comprising operating the user device to receive, from a remote control, a command to initiate a lookup for an audio identifier.

10. A method according to claim 8, further comprising operating the user device to:
store the subset of the audio portion; and
generate another audio fingerprint based on at least one of:
an additional subset of the audio portion; and
combined subsets of the audio portion of the received content.

11. A method according to claim 8, further comprising operating the user device to:
detect a time-based offset location of the received content corresponding to the audio fingerprint; and
send the time-based offset location onto the network.

12. A method of operating a system to associate an audio portion of received content with a multimedia program, the method comprising:
operating a user device (104) in accordance with the method of claim 8;
operating a server (110) to:
receive the program identifier and the audio fingerprint from the user device (104);
retrieve, based on the audio fingerprint, and audio identifier (408) that identifies the audio portion of the multimedia program;
associate the audio fingerprint with an audio identifier;
send a request including the program identifier, the request requesting program guide information associated with the program identifier;
receive program data including the program guide information; and
send, via the network interface, to the user device, the metadata associated with the audio identifier and the program data.

13. The method according to claim 12 further comprising operating the server to generate a record corresponding to the program identifier including at least one audio identifier associated with the multimedia program and metadata associated with each audio identifier.

14. The method according to claim 12 or 13 wherein the metadata includes a metric associated with each audio identifier.

15. A computer-readable medium having stored thereon sequences of instructions, the sequences of instructions including instructions which when executed by a computer system cause the computer system to:
receive:
a) a multimedia program from at least one source (102), the multimedia program comprising an audio portion and a video portion; and
b) program guide data including a program identifier for the multimedia program;
generate an audio fingerprint from a subset of the audio portion;
send the program identifier and the audio fingerprint onto a network; and receive an audio identifier associated with the audio fingerprint.
